# EUROPÄISCHE PATENTANMELDUNG

(11) **EP 4 198 917 A1**
(43) Veröffentlichungstag der Anmeldung: **21.06.2023**
(21) Anmeldenummer: 22201670.1
(22) Anmeldetag: 14.10.2022
(51) Int. Cl.: G06V 10/82, G06V 20/10, A01D 41/127

(54) **ANORDNUNG UND VERFAHREN ZUR OPTISCHEN BEURTEILUNG VON ERNTEGUT IN EINER ERNTEMASCHINE**

(30) Priorität: 17.12.2021 DE 102021133626
(71) Anmelder: Deere & Company, Moline, IL 61265 (US)
(72) Erfinder: SCHADE, PETER, 68163 Mannheim (DE); JUST, JOHN, 68163 Mannheim (DE); PANAMBILLY, AMBARISH, 68163 Mannheim (DE)
(74) Vertreter: Holst, Sönke

(57) **Zusammenfassung**

Eine Anordnung und ein Verfahren zur optischen Beurteilung von Erntegut in einer Erntemaschine (10) verwenden eine Kamera (66), die ein Bild des Ernteguts (62) aufnimmt und ein Bildverarbeitungssystem (78), dem ein Bildsignal (86) der Kamera (66) und ein Referenzbild (90) von Erntegut (62) zuführbar ist und das einen Ähnlichkeitsgrad des Referenzbilds (90) mit dem Bildsignal (86) berechnet und ausgibt.

## Beschreibung

Die vorliegende Erfindung bezieht sich auf eine Anordnung zur optischen Beurteilung von Erntegut in einer Erntemaschine, mit einer Kamera, die angeordnet ist, ein Bild des Ernteguts aufzunehmen und einem Bildverarbeitungssystem, das konfiguriert ist, anhand eines zugeführten Bildsignals der Kamera einen Ausgabewert hinsichtlich von Eigenschaften des Ernteguts zu erzeugen, sowie eine damit ausgestattete Erntemaschine und ein zugehöriges Verfahren.

### Stand der Technik

Mähdrescher sind große Maschinen, die Korn von einem Feld ernten, dreschen und reinigen. Ein Mähdrescher umfasst eine Anzahl verstellbarer Elemente, wie die Größe der Öffnungen eines Dreschkorbs oder eines Trennrosts, die Größe eines Dreschspalts, die Drehzahl einer Dreschtrommel, die Geschwindigkeit eines Reinigungsgebläses oder die Position von Lamellen eines Siebs. Der optimale Arbeitsparameter dieser Elemente hängt von der Erntegutart und dessen Eigenschaften ab und kann sich mit der Zeit verändern. Die Einstellung dieser Parameter wird üblicherweise durch den Bediener des Mähdreschers basierend auf Bedienungsanleitungen oder seiner Erfahrung oder automatisch durchgeführt, unter Verwendung von in einem Speicher abgelegten Werten, die durch den Bediener abhängig von den aktuellen Umgebungs- und Erntegutbedingungen abgerufen werden. In der Vergangenheit wurden viele Sensoren zur Erfassung von Ernteguteigenschaften (wie kapazitive Feuchtigkeitssensoren, Kameras und Nahinfrarotspektrometer) vorgeschlagen, um Ernteguteigenschaften an Bord des Mähdreschers zu erfassen und dem Bediener eine Indikation über die derzeit vorliegenden Eigenschaften des Ernteguts nach einer Bearbeitung in der Erntemaschine zu geben, basierend auf denen er (oder eine selbsttätige Steuerung) Parameter des Bearbeitungsprozesses in der Erntemaschine verändern kann. So kann er beispielsweise den Dreschspalt vergrößern und die Drehzahl der Dreschtrommel vermindern, wenn der Bruchkornanteil zu hoch ist.

Zur Gewinnung von Informationen zur manuellen oder automatischen Einstellung von Parametern des Bearbeitungsprozesses eines Mähdreschers eignet sich besonders eine Kamera, die beispielsweise ein Bild des gereinigten Korns erfasst, bevor es in den Korntank gelangt, oder ein Bild des Materials im Überkehrförderer, der Erntegut vom rückwärtigen Ende eines Siebes wieder dem Dreschvorgang oder einem separaten Nachdrescher zuführt.

Da ein unbearbeitetes Bild insbesondere für wenig erfahrene Bediener kaum aussagekräftig ist und der Bediener auch nicht die Zeit hat, kontinuierlich einen Bildschirm anzuschauen, auf dem das Bild der Kamera angezeigt wird, wird das Bild in der Regel mittels eines elektronischen Bildverarbeitungssystems verarbeitet, um einerseits dem Bediener bestimmte Partikel, wie Bruchkorn oder Verunreinigungen im dargestellten Bild des Ernteguts farblich oder auf andere Weise hervorgehoben anzuzeigen und andererseits aus dem Bild abgeleitete quantitative Größen (beispielsweise hinsichtlich des Bruchkorn- und/oder Verunreinigungsanteils) anzeigen zu können. Diese quantitativen Größen können, wie bereits erwähnt, zur manuellen oder automatischen Einstellung von Parametern des Bearbeitungsprozesses in der Erntemaschine herangezogen werden.

Eine mögliche Vorgehensweise zur Verwendung der Bilder sieht vor, bei unterschiedlichen Einstellungen des Mähdreschers Bilder aufzunehmen und das beste davon zu finden, um letztlich die Einstellung des Mähdreschers zu benutzen, bei welcher das beste Bild aufgenommen wurde (EP 1 763 988 A1). Bei der Auswahl des besten Bildes kann eine automatische Auswahlalgorithmik angewandt werden, die bestimmte Merkmale im Bild erkennt, z. B. Verunreinigungen. Hierbei wird nicht ein aktuelles, anhand des jeweils verarbeiteten Ernteguts erzeugtes Bild analysiert, sondern der Bediener oder die Auswahlalgorithmik sucht aus verschiedenen, in einer Versuchsreihe erzeugten Bildern jenes heraus, das die gewünschten Eigenschaften am besten repräsentiert.

Ein anderer Ansatz besteht darin, die aufgenommenen Bilder fortlaufend (online) zu analysieren, um daraus die gesuchten Größen abzuleiten. So beschreibt die EP 2 057 882 A2 einen Mähdrescher mit einem Bildverarbeitungssystem, das an den aufgenommenen, digitalisierten Bilddaten zunächst einen Helligkeitsausgleich durchführt. Das Bild wird dann einer Segmentierung unterzogen, die Einzelobjekte- und/oder kantenorientiert erfolgen kann. Bei einer Einzelobjekte-orientierten Segmentierung wird das Bild in durch in sich gleiche Helligkeits- oder Farbwerte definierte Einzelobjekte zerlegt. Anhand eines Vergleichs der Helligkeit der jeweiligen Region mit einem Sollwert oder einem Mittelwert der Helligkeit des Bildes wird darauf geschlossen, ob die Region ein Bruchkorn repräsentiert. Die Fläche des Bruchkorns wird durch Zählen der Pixel der Region ermittelt und anhand eines Vergleichs mit der Pixelzahl des Bildes wird der Bruchkornanteil evaluiert. Die kantenorientierte Segmentierung dient zur Identifizierung von Verunreinigungen und beruht auf einer Beurteilung der Längen der Grenzen der Einzelobjekte. Bei ausreichender Größe des Objekts wird davon ausgegangen, dass es sich um ein Stück Kurzstroh handelt. Die Flächen der als Kurzstroh identifizierten Objekte werden ebenfalls in Relation zur Größe des gesamten Bildes gesetzt, um den Anteil der Verunreinigungen zu ermitteln. Die Zuordnung der Bildobjekte zu den Klassen "Bruchkorn" oder "Kurzstroh" erfolgt demnach lediglich anhand der Helligkeit der Einzelobjekte bzw. ihrer Länge. Eine ähnliche Vorgehensweise zur Analyse ruhender Erntegutpartikel wird in der US 4 975 863 A beschrieben. Hier wird das Bild demnach anhand im Vorab programmierter Eigenschaften (Helligkeit und Kantenlänge zusammengehörender Partikel) analysiert. Dazu ist der Algorithmus zumindest hinsichtlich der zu evaluierenden Eigenschaften an das jeweilige Erntegut anzupassen und entsprechend zu programmieren, was relativ aufwändig ist, wenn unterschiedlichen Erntegutarten verarbeitet und analysiert werden sollen.

Ein anderer, häufig verwendeter Ansatz sieht vor, das Bild vorzuverarbeiten, um einzelne Objekte (z.B. ganze Körner, Bruchkorn und Verunreinigungen) zu identifizieren und anschließend die Informationen hinsichtlich der identifizierten Objekte einem Algorithmus zuzuführen, der die jeweiligen Objekte einer Klassifizierung unterzieht, um letztlich Rückschlüsse z.B. hinsichtlich des Anteils an Verunreinigungen oder Bruchkorn zu ziehen und darauf basierend verbesserte Einstellungen des Mähdreschers vorzuschlagen. Hierbei findet üblicherweise ein neuronales Netzwerk Verwendung, dem zuvor in einer Lernphase Beispielbilder und zugehörige, manuell erzeugte Klassifizierungen zugeführt werden (s. DE 10 2004 063 769 A1, EP 2 570 968 A2, DE 10 2020 118 160 A1, EP 3 038 054 A2, R. Ruan et al., Estimation of weight percentage of scabby wheat kernels using an automatic vision and neural network based system, Transactions of the ASAE Vol 44(4): 983-988 (2001) und B. Ni et al., Design of an Automated Corn Kernel Inspection System for Machine Vision, Transactions of the ASAE, Vol. 40(2): 491-497, (1997)). Auch hier ist es erforderlich, zunächst einen Lernvorgang durchzuführen, bei dem das neuronale Netzwerk anhand von Erntegut mit bekannten Eigenschaften trainiert wird.

### Aufgabe

Es ist eine Aufgabe der vorliegenden Erfindung, eine gegenüber dem Stand der Technik verbesserte Anordnung zur optischen Beurteilung von Erntegut in einer Erntemaschine und ein entsprechendes Verfahren bereitzustellen, bei dem die oben erwähnten Nachteile nicht oder in einem verminderten Maße vorliegen.

### Lösung

Diese Aufgabe wird durch die Lehren der Ansprüche 1, 8 und 9 gelöst, wobei die untergeordneten Ansprüche vorteilhafte Ausführungsformen beschreiben.

Eine Anordnung zur optischen Beurteilung von Erntegut in einer Erntemaschine umfasst eine Kamera, die angeordnet ist, ein Bild des Ernteguts aufzunehmen und ein Bildverarbeitungssystem, dem das Bildsignal der Kamera und ein Referenzbild von Erntegut zuführbar ist und einen Ähnlichkeitsgrad des Referenzbilds mit dem Bildsignal berechnet und ausgibt. Es wird somit die Ähnlichkeit zwischen dem Bildsignal der Kamera und dem Referenzbild ermittelt, was die im Stand der Technik vorgesehenen überwachten Lernvorgänge unnötig macht.

Insbesondere kann das Bildverarbeitungssystem ein Siamesisches Zwillingsnetzwerk mit zwei identischen neuronalen Netzwerken umfassen, wobei einem ersten der neuronalen Netzwerke das Bildsignal der Kamera und einem zweiten der neuronalen Netzwerke das Referenzbild zuführbar ist.

Die neuronalen Netzwerke können konfiguriert sein, Merkmalskarten aus den Bildern zu extrahieren und ein Rechner kann ein mathematisches Entfernungsmaß, insbesondere eine euklidische Entfernung, zwischen den Merkmalskarten berechnen, anhand welcher Entfernung der Ähnlichkeitsgrad ermittelbar ist.

Die Netzwerke können einem pseudo-überwachten Ählichkeitslernen unterzogen sein, bei dem den Netzwerken Paare von Übungsbildern zugeführt wurden, die ähnliche und unähnliche Paare und zugehörige Ähnlichkeitsklassen enthalten.

Die Kamera kann in einen Kanal blicken, in dem das Erntegut strömt, oder an einer beliebigen anderen Stelle einer Erntemaschine das Erntegut überwachen.

Der Ausgabewert des Bildverarbeitungssystems kann auf einer Anzeigeeinrichtung anzeigbar sein und/oder von einer Steuereinrichtung zur selbsttätigen Ansteuerung der Erntemaschine dienen oder bei Unterschreitung eines Schwellwerts des Ähnlichkeitsgrades zur Abgabe eines Warnhinweises auf der Anzeigeeinrichtung verwendet werden.

Das Referenzbild kann durch einen Bediener aus abgespeicherten Referenzbildern auswählbar oder im laufenden Ernteprozess wird ein mit der Kamera bei geeigneten Erntegutbedingungen aufgenommenen Bild des Ernteguts als Referenzbild übernommen.

Die beschriebene Erntemaschine kann ein Mähdrescher oder eine beliebige andere Erntemaschine sein, wie ein Feldhäcksler, bei dem die Schnittlänge und/oder der Gehalt des Ernteguts an angeschlagenen Körnern überwacht wird.

### Ausführungsbeispiel

Diese und andere Aufgaben, Merkmale und Vorteile der vorliegenden Erfindung werden dem Fachmann nach dem Lesen der folgenden detaillierten Beschreibung und angesichts der Zeichnungen offensichtlich.
Fig. 1 ist eine Seitenansicht einer Erntemaschine.
Fig. 2 ist eine schematische Ansicht des physischen Aufbaus eines Bildaufnahmesystems.
Fig. 3 zeigt ein Schema des Bildverarbeitungssystems.
Fig. 4 bis 6 zeigen Beispiele für Kamerabilder.
Fig. 7 zeigt die Vorgehensweise der neuronalen Netzwerke des Bildverarbeitungssystems.

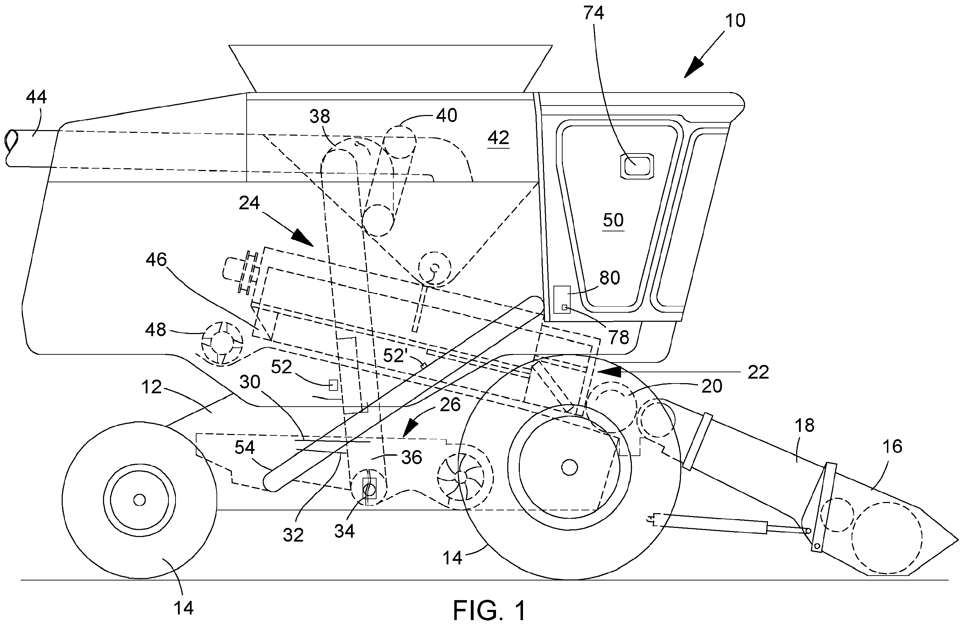

Es wird nun auf die Figur 1 verwiesen, in der eine landwirtschaftliche Erntemaschine in der Form eines Mähdreschers 10 gezeigt wird, welcher einen Hauptrahmen 12 mit angetriebenen vorderen und lenkbaren rückwärtigen, im Bodeneingriff befindlichen Rädern 14 umfasst, welche den Hauptrahmen 12 zur Vorwärtsbewegung über ein abzuerntendes Feld abstützen. Obwohl Räder 14 gezeigt werden, kann der Mähdrescher 10 komplett oder teilweise auf im Bodeneingriff befindlichen Raupenlaufwerken abgestützt werden. Der Antrieb der vorderen Räder 14 erfolgt durch ein konventionelles hydrostatisches Getriebe von einem am Hauptrahmen 12 befestigten Verbrennungsmotor. Im Folgenden beziehen sich Richtungsangaben (wie vorwärts) auf die Vorwärtsrichtung des Mähdreschers 10, die in der Figur 1 nach rechts verläuft.

Ein höhenverstellbarer Erntevorsatz in der Form eines Schneidwerks 16 wird verwendet, um Erntegut abzuernten und es einem Schrägförderer 18 zuzuführen. Der Schrägförderer 18 ist schwenkbar am Hauptrahmen 12 angelenkt und umfasst einen Förderer, um das eingefahrene Erntegut einer Leittrommel 20 zuzuführen. Die Leittrommel 20 fördert das Erntegut durch einen Einlassübergangsabschnitt 22 nach oben zu einem rotierenden Dresch- und Trennzusammenbau 24. Es können auch andere Orientierungen und Typen von Dreschstrukturen und andere Typen von Erntevorsätzen 16 verwendet werden, wie ein sich quer erstreckender Rahmen, der einzelne Reiheneinheiten abstützt.

Beim Erntebetrieb drischt und trennt der rotierende Dresch- und Trennzusammenbau 24 das Erntegut. Korn und Kaff fallen durch Roste am Boden des rotierenden Dresch- und Trennzusammenbaus 24 in ein Reinigungssystem 26. Das Reinigungssystem 26 umfasst ein Gebläse 28, obere Siebe 30 und untere Siebe 32, die das Kaff abtrennen. Das saubere Korn wird über die Breite des Reinigungssystems 26 durch eine Querförderschnecke 34 zusammengeführt, die es einem Elevator 36 für sauberes Korn zuführt. Der Elevator 36 umfasst Ketten und Paddel und fördert das saubere Korn in einen Übergangsabschnitt 38, von dem ausgehend es durch eine Korntankbefüllschnecke 40 in einen Korntank 42 gefördert wird. Das saubere Korn im Korntank 42 kann durch einen Entladeschneckenförderer 44 auf einen Kornwagen oder Lastwagen überladen werden. Überkehr wird vom rückwärtigen Ende des unteren Siebs 32 durch einen Überkehrelevator 54 an den rotierende Dresch- und Trennzusammenbau 24 zurückgegeben.

Ausgedroschenes, getrenntes Stroh wird vom rotierenden Dresch- und Trennzusammenbau 24 durch einen Auslass 46 einem Abgabeförderer 48 übergeben. Der Abgabeförderer 48 stößt das Stroh wiederum an der Rückseite des Mähdreschers 10 aus. Es ist anzumerken, dass der Abgabeförderer 48 das von Korn verschiedene Material direkt einem Strohhäcksler zuführen könnte. Der Betrieb des Mähdreschers 10 wird von in einer Bedienerkabine 50 aus gesteuert.

Zur optischen Untersuchung des Ernteguts und zur darauf basierenden Beurteilung des Dresch-, Trenn- und Reinigungsprozesses des Mähdreschers 10 ist ein Bildaufnahmesystem 52 vorgesehen. Es kann an der hochlaufenden Seite des Elevators 36 angeordnet sein und dort den Strom des Korns in den Korntank 42 überwachen und/oder als Bildaufnahmesystem 52' am Überkehrelevator 54 positioniert sein und dort den Überkehrerntegutstrom überwachen. Es wäre auch denkbar, ein Bildaufnahmesystem (nicht gezeigt) an einer Messkammer anzubringen, in die Erntegut diskontinuierlich eingefüllt und wieder daraus entnommen wird, wie in US 6 285 198 B1 oder EP 0 908 086 A1 gezeigt ist.

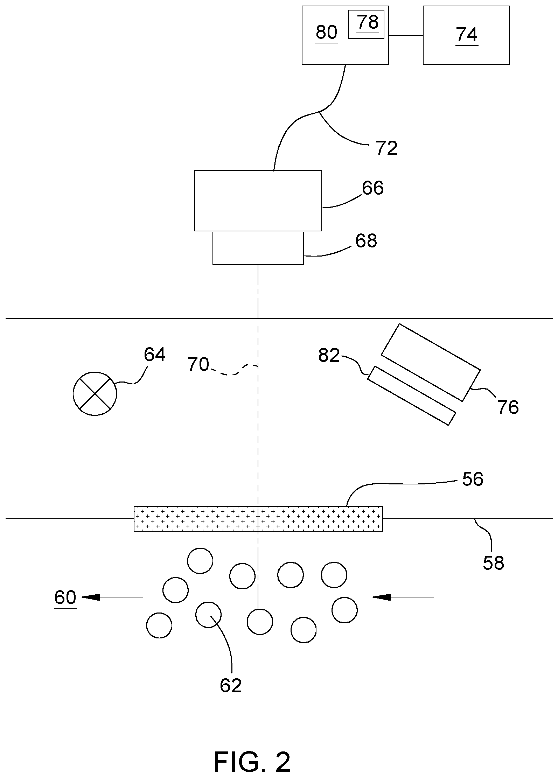

Das in der Figur 2 gezeigte Bildaufnahmesystem 52 umfasst eine für sichtbares Licht transparente Scheibe 56, die in eine Wand 58 des Erntegut 62 fördernden Kanals 60, bei dem es sich hier um den Elevator 36 oder den Überkehrelevator 54 handelt, eingefügt ist. Die Scheibe 56 ist auf einer oder beiden Seiten mit einer Vergütungsschicht versehen, um unerwünschte Reflexe zu vermeiden. Das Erntegut 62 wird durch eine oder mehrere Lichtquelle(n) 64 beleuchtet, die versetzt von der optischen Achse 70 der Scheibe 56 und in einem Winkel zur optischen Achse 70 angeordnet sind. Die Lichtquelle 64 kann als Glühlampe, Blitzleuchte, Ringblitzleuchte oder vorzugsweise als Leuchtdiode ausgeführt sein. Ein Objektiv 68 einer Kamera 66 ist auf der optischen Achse 70 der Scheibe 56 angeordnet und blickt durch die Scheibe 56 auf das Erntegut 62 im Kanal 60. Ein optionaler Nahinfrarotsensor (der jedoch eine Lichtquelle 64 mit hinreichend kontinuierlichem Spektrum benötigt) mit einem dispersiven Element 82 und einem Detektorarray 76 kann zur Analyse von Inhaltsstoffen des Ernteguts 62 vorgesehen sein. Anders als gezeigt könnte das Bildaufnahmesystem 52 auch zwei Lichtquellen 64 umfassen, von denen je eine der Kamera 66 und dem Nahinfrarotsensor zugeordnet ist (s. EP 1 956 361 A2), oder der Nahinfrarotsensor kann entfallen.

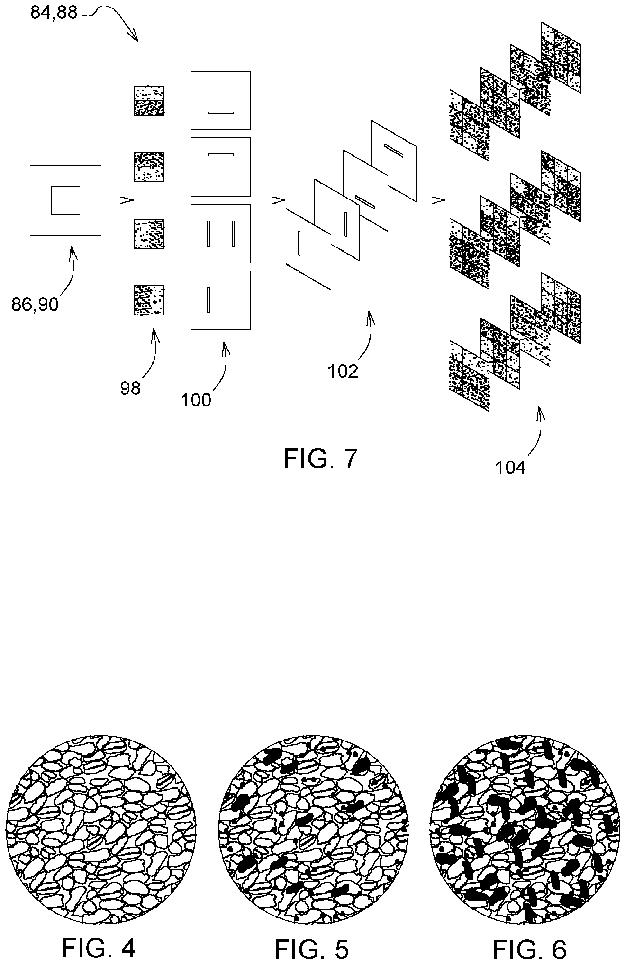

Die Kamera 66 hat einen digitalen Ausgang, der mittels eines Kabels 72 mit einer elektronischen Steuereinrichtung 80 verbunden ist, die ein Bildverarbeitungssystem 78 umfasst und mit einer Anzeigeeinrichtung 74 verbunden ist. Im Betrieb nimmt die Kamera 66 fortlaufend Bilder des Ernteguts 62 auf, die vom Bildverarbeitungssystem 78 analysiert werden. Die Ergebnisse des Bildverarbeitungssystems 78 werden direkt oder über die Steuereinrichtung 80 an die Anzeigeeinrichtung 74 weitergeleitet. Typische Bilder der dem (am Elevator 36 positionierten) Bildaufnahmesystem 52 zugeordneten Kamera 66, die somit Korn im Elevator 36 zeigt, sind in der Figur 4 (mit ordnungsgemäß gereinigtem Korn), Figur 5 (Korn mit einigen Verunreinigungen) und Figur 6 (Korn mit sehr vielen Verunreinigungen) dargestellt. Auf der Anzeigeeinrichtung 74 kann in einem speziellen Menü oder einem zugeordneten Bereich auf der Anzeigefläche das unverarbeitete oder aufbereitete Bild der Kamera 66 und/oder eine daraus abgeleitete Information, wie beispielsweise ein berechneter Verunreinigungsgrad, angezeigt werden.

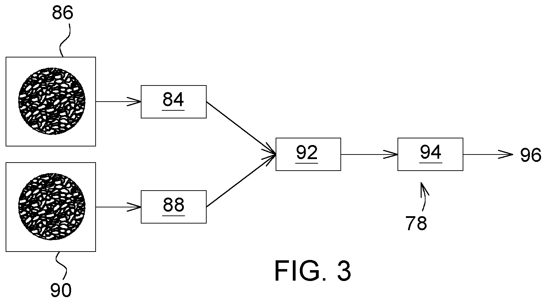

Es wird nun auf die Figur 3 verwiesen, in welcher der Aufbau des Bildverarbeitungssystems 78 gezeigt wird. Es umfasst ein erstes neuronales Netzwerk 84, dem ein abgespeichertes Referenzbild 90 zugeführt wird, welches optimal gereinigtes Korn repräsentiert, sowie ein zweites (gleichartiges) neuronales Netzwerk 90, dem das aktuelle Bildsignal 86 von der Kamera 66 zugeführt wird. Das Referenzbild 90 kann im Bildverarbeitungssystem 78 fest eingespeichert bzw. aus abgespeicherten Bildern ausgewählt worden sein oder es wird im laufenden Ernteprozess mit der Kamera 66 aufgenommen und abgespeichert, wenn der Bediener anhand des auf der Anzeigeeinrichtung 74 angezeigten Bildes der Kamera 66 erkennt, dass er mit der Qualität (Reinheit und Bruchkornanteil) des Ernteguts 62 zu Frieden ist und eine entsprechende Eingabe macht, welches das Bildverarbeitungssystem 78 veranlasst, das aktuelle Bild der Kamera 66 als Referenzbild 90 zu übernehmen und abzuspeichern.

Ein erster Rechner 92 ist mit den Ausgängen beider Netzwerke 84, 88 verbunden und berechnet ein mathematisches Entfernungsmaß, insbesondere eine euklidische Entfernung, zwischen Ausgangwerten der Netzwerke 84, 88. Ein zweiter Rechner 94 berechnet eine Verlustfunktion und liefert ein Ergebnis 96 an die Anzeigeeinrichtung 74, das ein Maß für die Ähnlichkeit beider Bilder 86, 90 darstellt. Es sei noch angemerkt, dass die Netzwerke 84, 88 und die Rechner 92, 94 nicht als hardwaremäßige Einheiten zu verstehen sind, sondern lediglich die durchgeführten Funktionen wiedergeben sollen. Sie können somit als Softwaremodule oder algorithmische Funktionsblöcke auf einem einzigen oder mehreren Prozessoren verwirklicht werden.

Das Bildverarbeitungssystem 78 ist ein so genanntes Siamesisches Zwillingsnetzwerk (engl.: "Twin Network" oder "Siamese Artificial Neural Network"), wie es im Stand der Technik beispielsweise für die Gesichtserkennung verwendet wird. Das Bildverarbeitungssystem 78 liefert somit anhand (nur) des aktuellen Bilds 86 des Ernteguts, das jeweils mit der Kamera 66 aufgenommen wird, sowie anhand des abgespeicherten Referenzbilds 90 ein Ergebnis 96, das den Ähnlichkeitsgrad beider Bilder 86, 90 wiedergibt.

So könnte man das in Figur 4 gezeigte Bild als Referenzbild 90 verwenden, und würde bei dem in Figur 5 gezeigten Bild, das einen recht hohen Anteil an Verunreinigungen (Spelzen) zeigt, einen relativ geringen Ähnlichkeitsgrad von z.B. 35 % als Ergebnis 96 erhalten, während sich beim Bild nach Figur 6, das fast nur Verunreinigungen zeigt, ein noch kleinerer Ähnlichkeitsgrad ergeben würde.

Eine Vorgabe von irgendwelchen Daten hinsichtlich von Abmessungen des Ernteguts und von Verunreinigungen oder eine Klassifizierung anhand manuell evaluierter Bilder erübrigt sich, und das Bildverarbeitungssystem 78 kann anhand des Referenzbilds 90 schnell und einfach auf jegliche Erntegutarten abgestimmt werden. Anhand des Ergebnisses 96 (Ähnlichkeitsgrad) kann dem Bediener auf der Anzeigeeinrichtung 74 bei Unterschreiten eines vorgegebenen Schwellwerts (z.B., wenn der Ähnlichkeitsgrad unter 91 % gesunken ist) ein Hinweis gegeben werden, dass eine Neueinstellung von Arbeitsparametern des Dresch- und Trennzusammenbaus 24 und/oder des Reinigungssystems 26 und/oder eine Fahrgeschwindigkeitsänderung sinnvoll erscheint. Es könnte auch - analog zu EP 1 763 988 A1 - eine Versuchsreihe mit unterschiedlichen Einstellungen von Arbeitsparametern des Dresch- und Trennzusammenbaus 24 und/oder des Reinigungssystems 26 und/oder Fahrgeschwindigkeiten selbsttätig durchgespielt werden, wobei letztlich die Einstellung ausgewählt wird, die die größte Ähnlichkeit des Bilds 86 mit dem Referenzbild 90 ergeben hat.

Zur Erläuterung der Funktionsweise der neuronalen Netzwerke 84, 88 wird nun auf die Figur 7 verwiesen. Die Grundlage der hier verwendeten Bildverarbeitung ist eine Gruppe neuronaler Netzwerke 84, 88, die als Faltungsneuralnetzwerke (engl.: "Convolutional Neural Networks") bekannt sind. Zum Verständnis des hier verwendeten Algorithmus reicht es aus, dass die Netzwerke 84, 88 als Werkzeuge zum Extrahieren von Merkmalen verwendet werden. Zur Wirkungsweise sei auch auf die Literatur zu Siamesischen Neuronalen Netzwerken verwiesen, z.B. G. Koch et al., Siamese Neural Networks for One-shot Image Recognition, Proceedings of the 32 nd International Conference on Machine Learning, Lille, France, 2015. JMLR: W&CP Vol. 37 (abgerufen am 8.12.2021 unter https://www.cs.cmu.edu/~rsalakhu/papers/oneshot1.pdf ) oder D. Chicco, "Siamese neural networks: an overview", Artificial Neural Networks, Methods in Molecular Biology, 2190 (3rd ed.), New York City, New York, USA: Springer Protocols, Humana Press, pp. 73-94 (2020), deren Offenbarung durch Verweis mit in die vorliegenden Unterlagen aufgenommen wird.

Die Figur 7 zeigt die Vorgehensweise beim Extrahieren von Merkmalen. Das ist ein wesentlicher Schritt zum Extrahieren bedeutsamer (einen sinnvollen Informationsgehalt aufweisender) Merkmale aus den von der Kamera 66 erhaltenen Bildern 86, 90. Wie in der Figur 7 gezeigt, werden eine Reihe an (Faltungs-) Filtern 98 auf das jeweils einlaufende Bild 86, 90 angewandt, um eine erste Menge an repräsentativen Merkmalskarten 100 zu erhalten. Die erste Menge an Merkmalskarten 100 wird in einem Stapel 102 hintereinander angeordnet. Dieser Stapel 102 bildet den Eingangswert für eine zweite Schicht an Merkmalskarten 104. Dieser Prozess der Erzeugung der zweiten Schicht an Merkmalskarten 104 wird wiederholt, bis die hochdimensionalen Bilder 86, 90 verdichtet und abgespeichert (sub-gesamplt) sind und repräsentative Merkmalskarten 104 entlang der Höhe, Breite und Tiefe (Kanäle) der Videodaten herausgezogen wurden.

Wie oben erwähnt und in der Figur 3 gezeigt, findet im Bildverarbeitungssystem 78 ein Siamesisches Zwillingsnetzwerk Verwendung. Hierbei wird ein pseudo-überwachtes Ähnlichkeitslernen genutzt. Wie der Name schon sagt, verwendet diese Vorgehensweise eine Pseudoüberwachung, um eine Ähnlichkeitsfunktion zu lernen, welche erkennt, ob ein gegebenes Eingangsbild 86 ähnlich den Referenzbild 90 ist oder nicht. Die Ausgabe 96 des Netzwerks ist ein Ähnlichkeitswert, der zwischen 0 und 1 liegen kann, wobei 1 die größte Ähnlichkeit darstellt und 0 die geringste. Die für diese Aufgabe verwendete Architektur des neuronalen Netzwerks ist das an sich bekannte Siamesische Zwillingsnetzwerk, das eine nachgewiesen kurze Verarbeitungszeit benötigt und sicher gegen Verwechslungen ist, wie anhand von Unterschriftsprüfungen, Gesichtserkennung und dergleichen nachgewiesen wurde. Die vorliegende Vorgehensweise beabsichtigt, sich von derartigen vorherigen, erfolgreichen Aufgaben inspirieren zu lassen und den Erfolg der Siamesischen Zwillingsnetzwerke zur Detektion von Unregelmäßigkeiten in zu untersuchendem Erntegut zu nutzen.

Die grundlegende Architektur des hier verwendeten Siamesischen Netzwerks ist in der Figur 3 dargestellt. Die beiden Netzwerke 84, 88 sind in allen Aspekten identisch, einschließlich der Architektur, der Parametergröße, Optimierungsstrategien etc., was auch die Motivation für die Namensgebung ist.

Die beiden Netzwerke 84, 88 werden vor dem Einsatz zunächst einem Training unterzogen.

Dazu werden den Netzwerken 84, 88 anstelle der Bilder 86, 90 geeignete Paare von Übungsbildern zugeführt. Es sind dabei Paare enthalten, die als ähnlich klassifiziert werden, wie auch Paare an Bildern, die als nicht ähnlich klassifiziert sind. Die einer ähnlichen Klasse zugehörigen Paare werden als positive Paare bezeichnet und jene, die einer nicht ähnlichen Klasse zugehören, werden als negative Paare bezeichnet. Im Falle der Untersuchung von Anomalitäten von Korn, wie im vorliegenden Ausführungsbeispiel, wird ein Paar an Bildern, das Proben von Korn mit guter Qualität zeigt, als positives Paar bezeichnet und der Klasse 1 zugeordnet. Analog wird ein Paar, das ein Bild mit guter Kornqualität und ein Bild mit Anomalitäten enthält, als negatives Paar gekennzeichnet und der Klasse 2 zugeordnet. Dieser Prozess wird iterativ durchgeführt, bis eine hinreichend große Anzahl an Bildern aus der Übungsbildmenge in positiven und negativen Paaren angeordnet wurden.

Der folgende Schritt sieht vor, beide Bilder als ein Paar durch die beiden Netzwerke 84, 88 zu leiten und Einbettungen oder Merkmalskarten zu erhalten (wie anhand der Figur 3 beschrieben). Diese Einbettungen oder Merkmalskarten 100 werden anschließend durch den Rechner 92 verglichen, der ein mathematisches Entfernungsmaß, insbesondere eine euklidische Entfernung, ermittelt, wobei es sich um eine angepasste Schichtoperation handelt, um einen Ergebniswert für die Einbettung zu berechnen. Die Berechnung des Entfernungsmaßes wird einen kleinen Ergebniswert für die Einbettung ergeben, wenn das untersuchte Paar ähnlich ist und einen großen Ergebniswert im gegenteiligen Fall. Das bedeutet für jegliches untersuchte Paar, dass wenn beide Bilder ähnlich sind, das Ergebnis nahezu identische Merkmalskarten sein werden, die weiterhin nach der Berechnung des Entfernungsmaßes einen kleinen Ergebniswert für die Einbettung ergeben werden.

Zum Abschluss wird das Modell (die Netzwerke) unter Verwendung einer binären Kreuzentropieverlustfunktion trainiert, genau wie eine binäre Klassifikationsaufgabe. Der Unterschied ist hier, dass die Klassifizierung durchgeführt wird, um festzustellen, ob das gegebene Paar zu einer ähnlichen Klasse gehört oder nicht. Ein Beispiel für dieses Training ist in der Figur 3 gezeigt. Dort wird ein negatives Bildpaar durch das identische Zwillingsnetzwerk 84, 88 mit geteilter (d.h. identischer) Architektur und Parametern geleitet. Da das Paar nicht zu derselben Klasse gehört, wird der Ergebniswert der Entfernungsberechnung (der euklidischen Entfernungsschicht) für die Einbettung ein hoher Wert sein. Gleichzeitig wurde dieses Paar schon zuvor als Klasse 2 oder unähnliche Klasse identifiziert. Wenn das Netzwerk anhand der binären Kreuzentropieverlustfunktion trainiert wird, wird das Netzwerk ertüchtigt oder ermutigt, die Ähnlichkeit zwischen positiven Paaren zu maximieren und die Ähnlichkeit zwischen negativen Paaren zu minimieren. Das passiert, da das Netzwerk 84, 88 lernen wird, dass jene Paare mit hohen Einbettungsergebniswerten unähnliche oder negative Paare sind und solche mit kleinen Einbettungsergebniswerten ähnliche oder positive Paare sind.

Bei der Echtzeitanwendung findet eine Erfassung eventueller Anomalitäten statt. Es wird ein Bild von Erntegut 62 hoher Qualität als Referenzbild 90 verwendet und dieses wird Bild für Bild (oder von Zeit zu Zeit) mit dem einlaufenden Videobildstrom der Kamera 66 verglichen. Das bedeutet, dass das den Zwillingsnetzwerken 84, 88 zugeführte Bildpaar aus dem Referenzbild 90 und dem Bild 86 von der Kamera 66 besteht. Das ausgegebene Ergebnis 96 wird ein Ähnlichkeitsergebnis zwischen 0 und 1 sein, wobei die näher an 1 liegenden Ergebnisse eine hohe Ähnlichkeit des Bilds 86 mit dem Referenzbild 90 anzeigen. Durch das Setzen einer Schwelle ist es relativ einfach, anomale Kornproben während des Erntebetriebs in Echtzeit zu erkennen.

Die Figur 5 zeigt ein Bild 86 bzw. 90 von Weizen mit hoher Qualität des Ernteguts 62, welches als Referenzbild 90 zum Vergleich mit den einlaufenden Bildern 86 von der Kamera 66 dienen kann. Anders als andere Ansätze tendieren auf Siamesischen Netzwerken basierende Ansätze dazu, bessere Leistung an nicht-farbigen Graustufenbildern zu liefern, und daher können das Training und die Auswertung vorliegend im schwarz-weißen Farbbereich durchgeführt werden, obwohl sie auch mit farbigen Bildern durchführbar sind. Auf der Anzeigeeinrichtung 74 können die Bilder 86, 90 jedoch in Farbe angezeigt werden. Solange das Bild 86 jenem nach Figur 4 ähnelt, wird ein relativ hoher Ähnlichkeitsgrad mit dem Referenzbild 90 ausgegeben. Wenn das Bild 86 jedoch, wie in Figur 5 gezeigt, Verunreinigungen oder Anomalitäten enthält, die auch als von Korn verschiedenes Material (englisch: Material other than Grain, MOG) bezeichnet werden, wird der Ergebniswert für die Ähnlichkeit recht klein sein und man kann somit mit hoher Sicherheit darauf schließen, dass die Probe anomal ist, und dass somit eine Neueinstellung von Arbeitsparametern des Mähdreschers 10 sinnvoll erscheint (und die Probe keinesfalls als Referenz dienen kann). Für die Probe der Figur 5 würde ein Ähnlichkeitsgrad von 35 % mit der Referenz 90 nach Figur 4 und für die sehr verunreinigte Probe der Figur 6 ein Ähnlichkeitsgrad von 0 % ermittelt.

Ein Vorteil der vorliegenden Vorgehensweise liegt darin, dass die Bildverarbeitung 78 sehr unempfindlich ist gegen unterschiedliche Kameraeinstellungen (Beleuchtung, Vergrößerungsmaßstab etc.) ist, auch wenn das Referenzbild 90 mit einer anderen Kamera 66 oder unter anderen Bedingungen aufgenommen wurde. Dennoch ist das Netzwerk in der Lage, einen sinnvollen Ähnlichkeitsgrad auszugeben. Es muss nur sichergestellt werden, dass das Netzwerk ein brauchbares Referenzbild 90 und ein aktuelles Bild 86 des Ernteguts 62 erhält, das eventuelle Änderungen widerspiegelt.

Gegenüber dem bisherigen Ansatz des überwachten Lernens erhält man somit die Vorteile, dass kein Bedarf an einer aktiven Überwachung oder unterschiedlichen Mengen an klassifizierten Bildern zum Lernen besteht, dass das vorhergesagte Ergebnis ein Maß für die Ähnlichkeit ist anstelle von Wahrscheinlichkeiten für bestimmte Klassen, dass man wesentlich weniger Daten zum Lernen benötigt und die Möglichkeit hat, eine sinnvolle Schwelle für unbrauchbare Proben zu setzen, dass das Vorgehen unempfindlich für Kameraeinstellungen und andere dynamische Änderungen ist, und man das Modell nicht fortlaufend mit neuen Klassen trainieren muss, und dass im Wesentlichen ein einziger Lernvorgang ausreicht.

## Patentansprüche

1. Anordnung zur optischen Beurteilung von Erntegut in einer Erntemaschine (10), mit einer Kamera (66), die angeordnet ist, ein Bild des Ernteguts (62) aufzunehmen und einem Bildverarbeitungssystem (78), das konfiguriert ist, anhand eines zugeführten Bildsignals (86) der Kamera (66) einen Ausgabewert (96) hinsichtlich von Eigenschaften des Ernteguts zu erzeugen, **dadurch gekennzeichnet, dass** dem Bildverarbeitungssystem (78) ein Referenzbild (90) von Erntegut (62) zuführbar ist und dass das Bildverarbeitungssystem (78) konfiguriert ist, einen Ähnlichkeitsgrad des Referenzbilds (90) mit dem Bildsignal (86) zu berechnen und auszugeben.

2. Anordnung nach Anspruch 1, wobei das Bildverarbeitungssystem (78) ein Siamesisches Zwillingsnetzwerk mit zwei identischen neuronalen Netzwerken (84, 88) umfasst und einem ersten der neuronalen Netzwerke (84) das Bildsignal (86) der Kamera (66) und einem zweiten der neuronalen Netzwerke (86) das Referenzbild (90) zuführbar ist.

3. Anordnung nach Anspruch 2, wobei die neuronalen Netzwerke (84, 88) konfiguriert sind, Merkmalskarten (104) aus den Bildern (86, 90) zu extrahieren und ein Rechner (92) konfiguriert ist, ein mathematisches Entfernungsmaß zwischen den Merkmalskarten (104) zu berechnen, anhand welcher der Ähnlichkeitsgrad ermittelbar ist.

4. Anordnung nach Anspruch 3, wobei die Netzwerke (84, 88) einem pseudo-überwachten Ähnlichkeitslernen unterzogen sind, bei dem den Netzwerken (84, 88) Paare von Übungsbildern zugeführt wurden, die ähnliche und unähnliche Paare und zugehörige Ähnlichkeitsklassen enthalten.

5. Anordnung nach einem der Ansprüche 1 bis 4, wobei die Kamera (66) in einen Kanal (60) blickt, in dem das Erntegut (62) strömt.

6. Anordnung nach einem der Ansprüche 1 bis 5, wobei der Ausgabewert (96) auf einer Anzeigeeinrichtung (74) anzeigbar ist und/oder von einer Steuereinrichtung (80) zur selbsttätigen Ansteuerung der Erntemaschine (10) oder bei Unterschreitung eines Schwellwerts des Ähnlichkeitsgrades zur Abgabe eines Warnhinweises auf der Anzeigeeinrichtung (74) verwendbar ist.

7. Anordnung nach einem der Ansprüche 1 bis 6, wobei das Referenzbild (90) durch einen Bediener aus abgespeicherten Referenzbildern auswählbar oder im laufenden Ernteprozess ein mit der Kamera (66) bei geeigneten Erntegutbedingungen aufgenommenes Bild des Ernteguts (62) als Referenzbild (90) übernehmbar ist.

8. Erntemaschine (10) mit einer Anordnung nach einem der vorhergehenden Ansprüche.

9. Verfahren zur optischen Beurteilung von Erntegut in einer Erntemaschine (10), bei dem eine Kamera (66) ein Bild des Ernteguts (62) aufnimmt und ein Bildverarbeitungssystem (78) anhand eines zugeführten Bildsignals (86) der Kamera (66) einen Ausgabewert (96) hinsichtlich von Eigenschaften des Ernteguts erzeugt, **dadurch gekennzeichnet, dass** dem Bildverarbeitungssystem (78) ein Referenzbild (90) von Erntegut (62) zugeführt wird ist und dass das Bildverarbeitungssystem (78) einen Ähnlichkeitsgrad des Referenzbilds (90) mit dem Bildsignal (86) berechnet und ausgibt.

10. Verfahren nach Anspruch 9, wobei das Bildverarbeitungssystem (78) ein Siamesisches Zwillingsnetzwerk mit zwei identischen neuronalen Netzwerken (84, 88) umfasst und einem ersten der neuronalen Netzwerke (84) das Bildsignal (86) der Kamera (66) und einem zweiten der neuronalen Netzwerke (86) das Referenzbild (90) zugeführt wird.
